# EUROPÄISCHE PATENTANMELDUNG

(11) **EP 2 218 660 A2**
(43) Veröffentlichungstag der Anmeldung: **18.08.2010**
(21) Anmeldenummer: 10152895.8
(22) Anmeldetag: 08.02.2010
(51) Int. Cl.: B65G 19/02, B65G 47/61, B65G 9/00

(54) **Hängefördersystem mit Be-/Entladeelement**

(30) Priorität: 16.02.2009 DE 102009009157
(71) Anmelder: RSL Logistik GmbH & Co. KG, 86899 Landsberg (DE)
(72) Erfinder: Schönenberger, Rolf, 86899, Landsberg/Lech (DE)
(74) Vertreter: Tiesmeyer, Johannes

(57) **Zusammenfassung**

Die vorliegende Erfindung betrifft ein Hängefördersystem mit einem Fördermittel (12), und einem schienenartigen Be-/Entladeelement (22), entlang dem das Fördermittel (12) an seiner Führungsschiene (10) hängend beweglich ist und das den Anhängeabschnitt (18) eines in der Be-/Entladezone befindlichen Fördermittels (12) wenigstens teilweise umgibt, wobei das Be-/Entladeelement (22) einen im Wesentlichen entlang der Förderstrecke des Systems verlaufenden Aufnahmeabschnitt (25) für die Haken (20) der Förderguthalter (46) umfasst, der an seiner Oberseite über seine gesamte Länge durchgehend frei ist, so dass er von beiden einander entgegengesetzten Seiten längs der Führungsschiene (10) für die Bestückung mit einem Haken (20) eines Förderguthalters (46) zugänglich ist.

## Beschreibung

Die Erfindung betrifft ein Hängefördersystem mit wenigstens einem Fördermittel, das wenigstens einen Laufkörper aufweist, durch den es hängend an einer Führungsschiene des Systems längs einer Förderstrecke beweglich ist, wobei das Fördermittel einen mit dem Laufkörper bzw. den Laufkörpern verbundenen Anhängeabschnitt für Haken von Förderguthaltern, insbesondere Kleiderbügeln, aufweist und wobei der Anhängeabschnitt über einen Halteabschnitt des Fördermittels derart mit dem Laufkörper bzw. den Laufkörpern verbunden ist, dass der Anhängeabschnitt an seiner Oberseite über seine gesamte Länge durchgehend frei ist, so dass er von beiden einander entgegengesetzten Seiten längs der Führungsschiene für die Bestückung mit einem Haken eines Förderguthalters zugänglich ist.

Ein derartiges Hängefördersystem ist aus der WO 2008/098596 A1 bekannt. Dabei kommen in einem solchen Hängefördersystem Fördermittel als sog. Einzelbügelträger oder auch als Mehrfachbügelträger zum Einsatz.

Solche Hängefördersysteme werden typischerweise eingesetzt für den Transport von Kleidungsstücken in Bekleidungswarenlagern, Wäschereien usw. Dabei hängen die Kleidungsstücke an Kleiderbügeln, die mit ihren Haken an den Anhängeabschnitten der Fördermittel hängen.

Die Fördermittel gemäß der WO 2008/098596 haben sich im Einsatz bewährt. Es hat sich allerdings gezeigt, dass insbesondere das automatische und direkte Be- und Entladen der Fördermittel zu Problemen führen kann. Insbesondere ist beispielsweise beim Beladen auf eine in etwa gleichmäßige Verteilung von Kleiderbügeln entlang des Fördermittels zu achten, wobei die Verteilung entlang dem Anhängeabschnitt manuell erfolgt, da im Anhängeabschnitt Kerben für das Einhängen der Kleiderbügelhaken vorgesehen sind. Ferner erfolgte das Anhalten von beladenen Fördermitteln bisher eher abrupt, was zu starken Belastungen und zum Teil auch unerwünschten starken Bewegungen (Schwenkbewegungen) der angehängten Kleider aufgrund wirkender Trägheitskräfte geführt hat.

Aufgabe der Erfindung ist es, ein Hängefördersystem der eingangs genannten Art bereitzustellen, bei dem die automatische Be- oder/und Entladung der Fördermittel mit Förderguthaltern, z.B. Kleiderbügeln, weiter vereinfacht wird.

Zur Lösung dieser Aufgabe wird erfindungsgemäß vorgeschlagen, dass das System an der Förderstrecke wenigstens eine Be-/Entladezone mit wenigstens einem schienenartigen Be-/Entladeelement umfasst, entlang dem das Fördermittel an seiner Führungsschiene hängend beweglich ist und das den Anhängeabschnitt eines in der Be-/Entladezone befindlichen Fördermittels wenigstens teilweise umgibt, wobei das Be-/Entladeelement einen im Wesentlichen entlang der Förderstrecke des Systems verlaufenden Aufnahmeabschnitt für die Haken der Förderguthalter umfasst, der an seiner Oberseite über seine gesamte Länge durchgehend frei ist, so dass er von beiden einander entgegengesetzten Seiten längs der Führungsschiene für die Bestückung mit einem Haken eines Förderguthalters zugänglich ist.

Der hier verwendete Begriff Be-/Entladen ist durchgängig als Beladen oder/und Entladen zu verstehen. Dies gilt auch für das Be-/Entladeelement bzw. die Be-/Entladezone.

Durch das Vorsehen eines schienenartigen Be-/Entladeelements wird erreicht, dass ein in Führungsschienenlängsrichtung keine Störkonturen aufweisendes Bauelement bereitgestellt wird, mit dem die Haken der an den Fördermitteln hängenden Kleiderbügel bei Bedarf in Eingriff gebracht werden können. Dabei wird das Einfahren in eine Be-/Entladezone und somit in ein Be-/Entladeelement nicht durch Störkonturen von Teilen einer Tragkonstruktion behindert, so dass ein derartiges schienenartiges Be-/Entladeteil im gesamten Hängefördersystem an entsprechenden Stellen zwecks Be-/Entladung bedarfsweise eingebaut werden kann. Ferner ermöglicht die in Führungsschienenlängsrichtung keine Störkonturen aufweisende Ausgestaltung des Be-/ Entladeelements auch die Nachrüstung von bestehenden Hängefördersystemen mit derartigen Be-/Entladeelementen.

Vorzugsweise sind der Aufnahmeabschnitt und der Anhängeabschnitt eines in der Be-/Entladezone befindlichen Fördermittels derart zueinander positionierbar oder positioniert, dass das Fördermittel unter Vermittlung von wenigstens einem Haken eines am Anhängeabschnitt aufgehängten Förderguthalters gebremst oder/und gehalten werden kann. Dabei steht in einer solchen Situation der Haken des Förderguthalters sowohl mit dem Aufnahmeabschnitt des Be-/Entladeelementes als auch mit dem Anhängeabschnitt des Fördermittels in Kontakt, so dass durch die wirkenden Reibungskräfte zwischen Haken und Aufnahmeabschnitt ein Abbremsen des Fördermittels ermöglicht werden kann.

Zum Bewegen der Fördermittel ist vorzugsweise ein entlang der Förderstrecke laufendes Reibband vorgesehen, mit dem Reibkopplungsmittel des Fördermittels in Berührung gebracht sind oder bringbar sind.

Durch das Zusammenwirken von Aufnahmeabschnitt, Anhängeabschnitt und wenigstens einem Haken eines Förderguthalters können die Reibkopplungsmittel eines in der Be-/Entladezone befindlichen Fördermittels vom Reibband entfernt werden. Durch diese Entkopplung des Fördermittels vom antreibenden Reibband kann das Fördermittel durch das Zusammenwirken von Aufnahmeabschnitt der Be-/Entladeschiene, Anhängeabschnitt des Fördermittels und Haken des Förderguthalters ein Anhalten bzw. Stoppen des Fördermittels erreicht werden.

Um das Einfahren in eine Be-/Entladezone zu gewährleisten, ohne dass eine sofortige Berührung am Aufnahmeabschnitt des Be-/Entladeelements und einem Haken eines Förderguthalters erfolgt, wird vorgeschlagen, dass das Be-/Entladeelement derart ausgebildet oder/und am Fördersystem angebracht ist, dass der Aufnahmeabschnitt des Be-/Entladeelements relativ zu einer durch die Führungsschiene festgelegten Förderrichtung entlang der Förderstrecke im Bereich der Be-/Entladezone in wenigstens eine Richtung geneigt ist. Dabei ist es bevorzugt, dass der Aufnahmeabschnitt bezogen auf die Förderrichtung zur Seite hin weg von der Führungsschiene oder/und nach oben zur Führungsschiene geneigt ist.

Eine derartige geneigte Anordnung des Aufnahmeabschnitts relativ zur Führungsschiene ermöglicht es, dass ein Fördermittel mit daran angehängten Förderguthaltern in die Be-/Entladezone einfahren kann, wobei der Aufnahmeabschnitt vorerst ohne Berührung zwischen Anhängeabschnitt und Haken aufgenommen wird. Bei weiterer Bewegung des Fördermittels in Förderrichtung erfolgt aufgrund der geneigten Ausgestaltung des Aufnahmeabschnitts eine Annäherung zwischen Hakeninnenseite und dem Aufnahmeabschnitt, so dass diese beiden Elemente miteinander in Kontakt kommen. Die dabei hervorgerufenen Reibungskräfte führen zu einem Abbremsen des Fördermittels. Dieses Abbremsen kann je nach Einstellung der Neigung schnell oder langsam erfolgen. Ferner kann durch eine Neigung des Aufnahmeabschnitts zur Seite hin weg von der Führungsschiene ein leichtes Verkippen des Fördermittels um die Auflageachse des Laufkörpers auf der Führungsschiene erreicht werden, wodurch die Reibkopplungsmittel vom Reibband abgehoben werden, was zu einem Anhalten bzw. Stoppen des Fördermittels führt.

Das Be-/Entladeelement weist vorzugsweise quer zur Förderrichtung ein im Wesentlichen U-förmiges Profil auf, wobei der eine der Schenkel des U-förmigen Profils den Aufnahmeabschnitt umfasst. Ferner wird vorgeschlagen, dass der andere Schenkel des U-fömigen Profils an einem die Führungsschiene aufweisenden Trägerrahmen des Fördersystems angebracht oder anbringbar ist.

Eine derartige U-förmige Ausgestaltung des schienenartigen Be-/Entladeelements ermöglicht eine Formgebung, welche der Außenkontur der Fördermittel angepasst ist, so dass diese innerhalb des U-Profils in Förderrichtung bewegt werden können. Ferner bietet das U-Profil die Möglichkeit, das Be-/Entladeelement an beliebigen Stellen entlang des Fördersystems anzubringen, ohne dass umfangreiche Umbauten am Fördersystem erforderlich sind. Dies ermöglicht auch die Nachrüstung von bestehenden Systemen mit derartigen Be-/Entladeelementen.

Das Be-/Entladeelement ist vorzugsweise derart ausgebildet, dass die beiden Schenkel und die Basis des U-förmigen Profils einen jeweiligen Abstand zum Fördermittel, insbesondere zu dessen Anhängeabschnitt und Halteabschnitt, aufweisen, wobei die Abstände derart bemessen sind, dass ein Fördermittel ohne daran angehängte Förderguthalter frei entlang dem Be-/Entladeelement beweglich ist. Hierdurch führen leere Förderguthalter in einer solchen Be-/Entladezone nicht zu einem Stau, da diese leeren Fördermittel ungehindert entlang des Be-/Entladeelements gefördert werden können.

Gemäß einer Ausführungsform ist das Be-/Entladeelement verstellbar an einem Trägerrahmen des Fördersystems angebracht, derart, dass die Position des Aufnahmeabschnitts relativ zum Anhängeabschnitt eines in der Be-/Entladezone befindlichen Fördermittels veränderbar ist, vorzugsweise in vertikaler Richtung veränderbar ist. Durch eine derartige vertikale Verstellbarkeit ist es möglich, Förderguthalter automatisch in den Anhängeabschnitt eines Fördermittels einzuhängen oder diese aus dem Anhängeabschnitt anzuheben. Dabei wird das Maß der vertikalen Beweglichkeit und die Gestaltung des Be-/Entladeelements derart gewählt, dass beispielsweise in einem Beladungsfall Förderguthalter entlang des Be-/Entladeelements am Aufnahmeabschnitt aufgehängt werden können, bevor Fördermittel in dieser Be-/Entladezone vorhanden sind. Sobald die Förderguthalter am Aufnahmeabschnitt verteilt aufgehängt sind, können leere Fördermittel ungehindert eingefahren werden, und durch anschließendes Absenken des Be-/Entladeelements werden die entlang dem Aufnahmeabschnitt verteilten Haken der Förderguthalter vom Aufnahmeabschnitt an den Anhängeabschnitt des Fördermittels übergeben und anschließend freigegeben, so dass die Fördermittel aufgrund des Reibbandantriebs aus der Be-/Entladezone ausfahren können. Selbstverständlich ist in einem derartigen Beladungsfall eine andere Einrichtung zum Anhalten der Fördermittel vorzusehen, wie sie beispielsweise aus der bereits genannten WO 2008/ 098596 bekannt sind. Selbstverständlich ist es auch denkbar, dass ein beladenes Fördermittel in eine Be-/Entladezone einfährt und aufgrund des zuvor beschriebenen geneigten Verlaufs des Aufnahmeabschnitts angehalten wird. In einem solchen Falle kann dann durch vertikales Anheben des Aufnahmeabschnitts bzw. des Be-/Entladeelements ein Abheben der Haken vom Anhängeabschnitt des Fördermittels erreicht werden, wodurch das vom Reibband abgekoppelte Fördermittel wieder freigegeben wird und zurück an das Reibband schwenkt, so dass es entladen aus der Be-/Entladezone ausfahren kann.

Vorzugsweise umfasst das Be-/Entladeelement am Aufnahmeabschnitt ein Anschlagelement, das Förderguthalter in Förderrichtung stoppt.

Ferner wird vorgeschlagen, dass das Be-/Entladeelement derart ausgebildet ist, dass am Aufnahmeabschnitt angehängte Förderguthalter durch Absenken des Be-/Entladeelements in den Aufnahmeabschnitt eines in der Be-/Entladezone bereitstehenden Fördermittels einhängbar sind und das Fördermittel mit angehängten Förderguthaltern über das Anschlagelement hinweg aus der Be-/Entladezone beweglich ist.

Ferner kann das Hängefördersystem eine vorzugsweise geneigte Förderguthalterzuführung oder/und eine Förderguthaltervereinzelungseinrichtung umfassen, um eine bestimmte Anzahl von Förderguthaltern automatisch auf dem in Förderrichtung anschließenden Be-/Entladeelement bereitzustellen zur weiteren Beförderung mittels eines Fördermittels.

Eine geneigte Förderguthalterzuführung bzw. Förderguthaltervereinzelungseinrichtung ist im Zusammenwirken mit einem anschließenden Be-/Entladeelement mit Anschlagelement insoweit vorteilhaft, als dass sich Förderguthalter, die entlang der geneigten Förderstrecke beschleunigt worden sind, auf das im Wesentlichen horizontale Be-/Entladeelement bewegen. Dabei kommt der in Förderrichtung vorderste Haken des vordersten Förderguthalters in Berührung mit dem Anschlagelement. Die nachfolgenden Förderguthalter laufen aufeinander auf, wobei durch das Abstoppen eine Schwenkbewegung der beladenen Förderguthalter zunächst in Förderrichtung und anschließend in die Gegenrichtung erfolgt. Dabei werden die Förderguthalter bei der zur Förderrichtung gegenläufigen Schwenkbewegung entlang dem Be-/Entladeelement entgegen der Förderrichtung verteilt, so dass sie in einem mehr oder weniger regelmäßigen Abstand zueinander angeordnet sind, was eine vorteilhafte Vorbereitung ist für das anschließende automatische Übergeben der Förderguthalter vom Be-/Entladeelement auf den Anhängeabschnitt des Fördermittels durch vertikales Absenken des Aufnahmeabschnitts.

Schließlich wird vorgeschlagen, dass der Aufnahmeabschnitt des Be-/Entladeelements ein Gleitstück aufweist, auf dem Haken der Förderguthalter aufnehmbar und verschiebbar sind, wobei sich das Gleitstück vorzugsweise im Wesentlichen über die gesamte Länge des Be-/Entladeelements erstreckt. Es wird insbesondere daran gedacht, dass das Be-/Entladeelement aus Metall, insbesondere Aluminium oder dgl. hergestellt ist, und dass das dem Aufnahmeabschnitt zugeordnete Gleitstück aus einem Kunststoff hergestellt ist. Ferner wird vorgeschlagen, dass das Gleitstück eine zu den Haken weisende gekrümmte Außenkontur aufweist, so dass die Haken am Gleitstück im Wesentlichen punktuell gelagert sind.

Die Erfindung wird nachfolgend unter Bezugnahme auf die anliegenden Figuren anhand einer Ausführungsform beispielhaft und nicht einschränkend beschrieben.
- Fig. 1: zeigt in einer schematischen Darstellung von der Seite eine Be-/Entladezone mit darin einfahrenden Fördermitteln.
- Fig. 2: zeigt in den Teilfiguren a) bis c) Teilschnittdarstellungen entsprechend den Schnittlinien IIa-IIa, IIb-IIb und IIc-IIc der Fig. 1.
- Fig. 3: zeigt in den Teilfiguren a) und b) in Seitenansicht (3a)) und Draufsicht von oben (Fig. 3b)) den durch jeweils eine Linie repräsentierten Verlauf einer Führungsschiene und eines Be-/Entladeelements.
- Fig. 4: zeigt in den Teilfiguren a) bis c) ein Be-/Entladeelement im Zusammenwirken mit einer geneigten Zuführstrecke in schematischer Seitenansicht.
- Fig. 5: zeigt in den Teilfiguren a) und b) in einer zur Fig. 2 ähnlichen Querschnittsdarstellung das Übergeben von Förderguthaltern von Be-/Entlademitteln auf das Fördermittel.

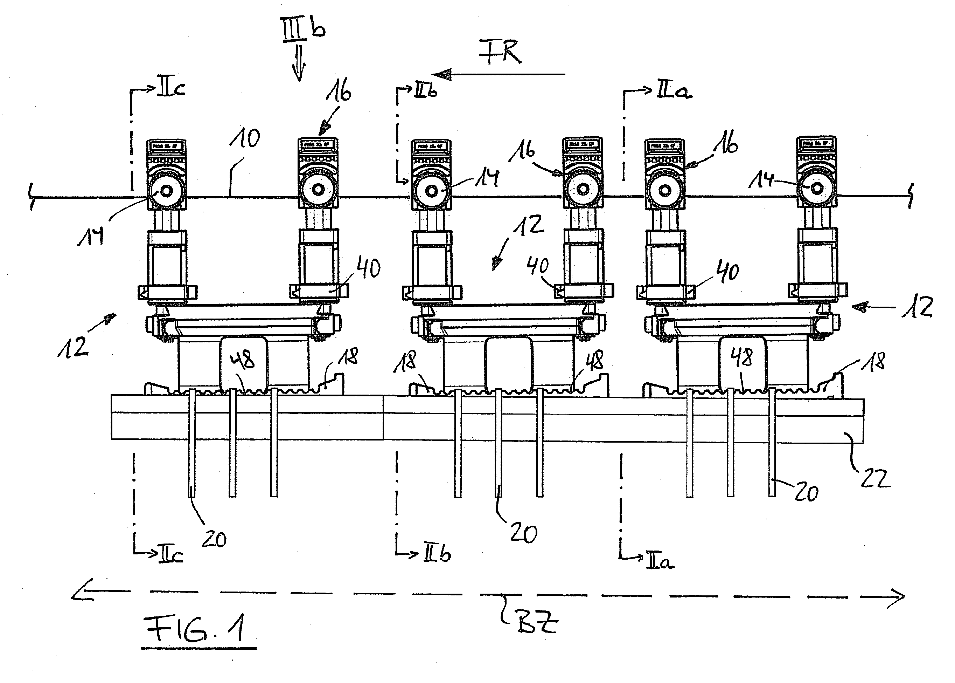

In Fig. 1 sind an einer rein schematisch als Linie dargestellten Führungsschiene 10 mehrere Fördermittel 12 in Form von sogenannten Minitrolleys angehängt, die mittels Rollen 14 eines Laufkörpers 16 entlang der Führungsschiene in Förderrichtung FR beweglich sind. Die Fördermittel 12 weisen einen Anhängeabschnitt 18 auf, an dem Haken 20 von Förderguthaltern, beispielsweise Kleiderbügeln, eingehängt sind, um die Kleiderbügel und daran angehängte Kleidungsstücke transportieren zu können. Selbstverständlich können auch nicht dargestsellte Einzelgutfördermittel, sogenannte Single-Carrier, zum Einsatz kommen, an denen im Normalfall nur ein einzelner Kleiderbügel angehängt ist bzw. werden kann.

Die Fördermittel sind im Bereich einer Be-/Entladezone BZ dargestellt, wobei in den Fig. 1 bis 3 die Situation in Bezug auf das Entladen von Fördermitteln 12 beschrieben wird. In der Entladezone ist ein schienenartiges Be-/Entladeelement 22 angeordnet, das sich entlang der durch die Führungsschiene 10 festgelegten Förderrichtung FR erstreckt.

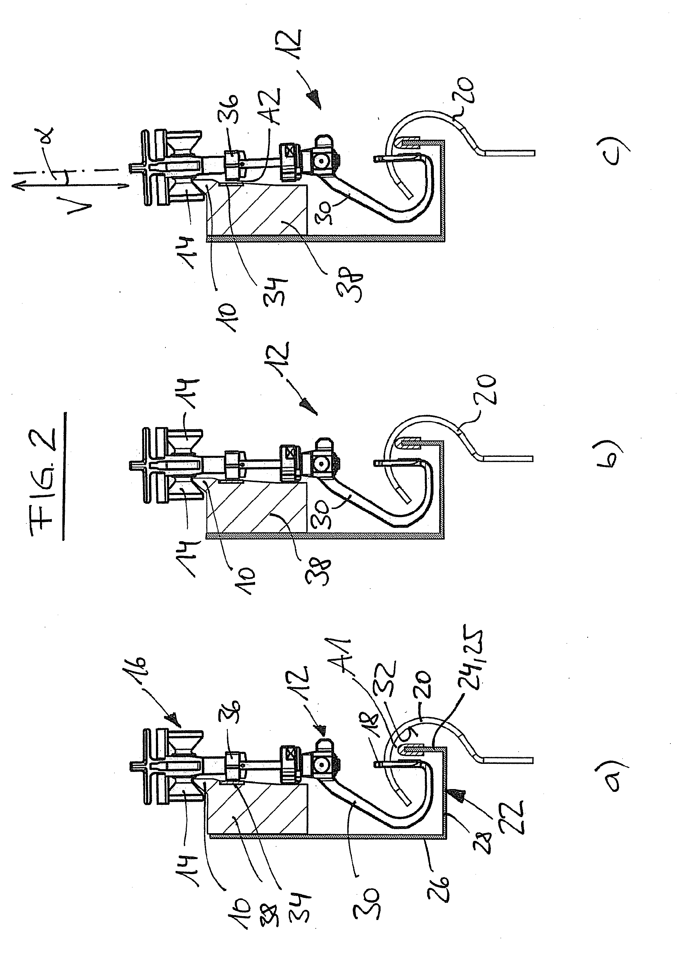

Es wird nun auch unter Bezugnahme auf die Fig. 2 die Funktionsweise eines derartigen Be-/Entladeelements 22 beschrieben. In der Fig. 2 sind Teilschnittdarstellungen entsprechend den Schnittlinien IIa-IIa, IIb-IIb und IIc-IIc der Fig. 1 dargestellt. Wie aus der Fig. 2a) ersichtlich, kann zu Beginn einer Entladezone das Fördermittel ungehindert entlang des Be-/Entladeelements 22 einfahren. Das Be-/Entladeelement 22 weist ein im Wesentlichen U-förmiges Querschnittsprofil auf, wobei die beiden Schenkel 24 und 26 sowie die Basis 28 den Anhängeabschnitt 18 sowie einen sich daran anschließenden Halteabschnitt 30 des Fördermittels 12 wenigstens teilweise umgeben. Die Dimensionierung und Anordnung der Be-/Entladeschiene 22 ist derart gewählt, dass der eine Schenkel 24 zwischen dem Aufnahmeabschnitt 18 und einer Innenkontur 32 eines Hakens 20 des Förderguthalters aufnehmbar ist.

Aus der Fig. 2 ist auch ersichtlich, dass der Laufkörper 16 über ein Rollenpaar verfügt, wobei nur eine Rolle 14 auf der Führungsschiene 10 aufliegt. Ferner ist aus der Fig. 2 ersichtlich, dass ein Reibband 34 unterhalb des Laufkörpers 16 vorgesehen ist, das in Förderrichtung FR umläuft und mit dem die Fördermittel 12 mittels eines Reibkopplungselements 36 zwecks Beförderung der Fördermittel 12 gekoppelt werden können. Dabei erfolgt die Mitnahme der Fördermittel 12 alleine dadurch, dass das Fördermittel 12 aufgrund der wirkenden Kräfte (Schwerkraft) vertikal nach unten hängt und somit die Reibkopplungsmittel 36 in Berührung mit dem Reibband 34 kommen.

Wie aus der Fig. 1 und auch aus der Fig. 2 ersichtlich, verringert sich der in Fig. 2a) ersichtliche Abstand A1 zwischen einem oberen Ende des Schenkels 24 und der Innenkontur 32 des Hakens 20 bei weiterem Einfahren des Fördermittels 12 in Förderrichtung FR, so dass der Haken 20 zunächst in Berührung mit dem Schenkel 24 kommt, wodurch eine Bremswirkung auf das Fördermittel 30 ausgeübt wird (Fig. 2b)) und wobei zum Schluss durch das Zusammenwirken zwischen Haken 20, Anhängeabschnitt 18 und Schenkel 24 das Fördermittel leicht aus der Vertikalen V verkippt wird, so dass zwischen dem Reibband 34 und dem Reibkopplungsmittel 36 ein kleiner Abstand A2 gebildet wird unter Ausbildung eines Kippwinkels α, was zum Anhalten bzw. Stoppen des Fördermittels 12 führt.

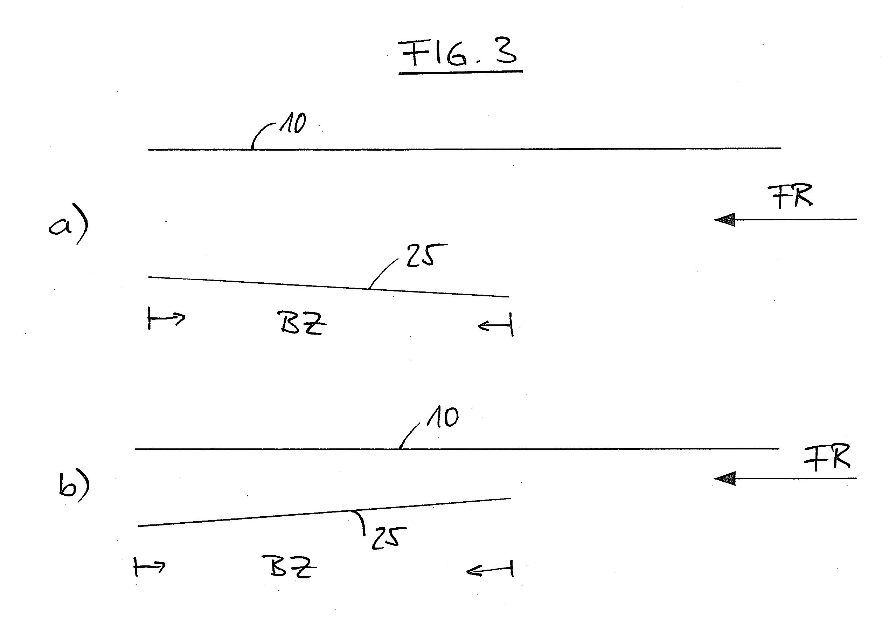

Die Änderung des Abstands A1 zwischen dem Schenkel 24 und dem am Anhängeabschnitt 18 angebrachten Haken 20 erfolgt dadurch, dass ein den Schenkel 24 umfassender Aufnahmeabschnitt 25 relativ zur Führungsschiene 10 geneigt verläuft. Dies ist rein schematisch und hinsichtlich der Neigung verstärkt in Fig. 3 dargestellt, wobei Fig. 3a) eine Seitenansicht ähnlich zu Fig. 1 darstellt. Es ist ersichtlich, dass die Führungsschiene 10 im Wesentlichen horizontal verläuft, und dass der Aufnahmeabschnitt 25 relativ zur Führungsschiene 10 in Förderrichtung FR ansteigt. Ferner verläuft der Aufnahmeabschnitt 25, wie aus der Fig. 3b) ersichtlich, welche einer Draufsicht von oben entsprechend dem Pfeil IIIb der Fig. 1 entspricht, bezogen auf die Förderrichtung FR zusätzlich seitlich nach außen. Somit weist der Aufnahmeabschnitt 25 einen in zwei Richtungen geneigten Verlauf auf, nämlich einerseits in vertikaler Richtung hin zur Führungsschiene 10 und in horizontaler Richtung weg von der Führungsschiene. Diese geneigte Ausführung des Aufnahmeabschnitts 25 ermöglicht einerseits ein einfaches und sicheres Einfahren von Fördermitteln mit daran angehängten Förderguthaltern zu Beginn der Be-/Entladezone BZ und ferner ermöglicht diese zweifache Neigung das Annähern des Aufnahmeabschnitts 25 an die Innenkontur 32 von Haken 20 der Förderguthalter, so dass das in Bezug auf die Fig. 2b) und 2c) beschriebene Abbremsen und Anhalten durch Verkippen des Fördermittels um die Achse der Führungsschiene 10 zwecks Abheben vom Reibband 34 ermöglicht wird.

Wie aus der Fig. 2 ersichtlich, ist die Be-/Entladeschiene 22 über den Schenkel 26 mit einem rein schematisch dargestellten Rahmen 38 des Fördersystems verbunden. Hierdurch und durch die U-förmige Ausgestaltung des Be-/Entladeelements 22 kann einerseits der zum Anhängen von Kleiderbügeln mit Kleidern erforderliche Raum unterhalb des Fördermittels 30 freigehalten werden und ferner kann durch diese Konstruktion die Be-/Entladeschiene 22 an beliebigen Stellen entlang der Förderstrecke eingebaut werden, da keine weiteren Tragkonstruktionen erforderlich sind, sondern bestehende Rahmenkonstruktion und dgl. zur Befestigung genutzt werden.

In einer Situation gemäß Fig. 2c), in welcher das Fördermittel 12 gestoppt wurde aufgrund des Zusammenwirkens zwischen Haken 20, Aufnahmeabschnitt 25 und Anhängeabschnitt 18, liegen die Haken auch auf dem Aufnahmeabschnitt 25 auf, so dass eine Entlastung der Anhängeabschnitte 18 des Fördermittels 12 erreicht wird. Wenn nun beispielsweise die drei in Fig. 1 ganz links dargestellten Kleiderbügel 20 vom Anhängeabschnitt 18 entfernt werden, schwenkt das Fördermittel 12 um die Führungsschienenachse zurück und kommt mit dem Reibkopplungsmittel 36 wieder in Kontakt mit dem weiterhin laufenden Reibband 34, so dass das nun entladene Fördermittel 12 leer aus der Entladezone ausfahren kann. Es ist hierzu nicht erforderlich, dass die Bedienperson, welche die Kleiderbügel entfernt, das Fördermittel 12 anstößt bzw. eine Freigabe des Fördermittels 12 in die Wege leiten muss. Die Länge der Be-/Entladeschiene 22 kann variabel ausgestaltet werden, und es ist auch denkbar, dass der Aufnahmeabschnitt in einer Position gemäß Fig. 2c) über eine gewisse Länge parallel zur Führungsschiene 10 verläuft, so dass in Förderrichtung FR mehrere Fördermittel 12 im abgekoppelten Zustand vom Reibband 34 (Fig. 2c)) hintereinander Platz haben. Es wird ferner darauf hingewiesen, dass die Fördermittel 12 Freischaltmittel 40 aufweisen, wobei die Freischaltmittel 40 im Stau von aufeinander folgenden Fördermitteln 12 miteinander in Wechselwirkung treten, um die Fördermittel 12 so zu verschwenken, dass die Reibkopplungsmittel 36 vom Reibband 34 freikommen. Somit ist auch gewährleistet, dass in die Be-/Entladezone BZ einfahrende Fördermittel 12 bei einem Stau zuverlässig vom Reibband abgekoppelt werden. Zur Funktionsweise der Freischaltmittel 40 wird auf die WO 2008/098596 verwiesen.

Beim Entladen von einem Fördermittel 12 erfolgt somit in einer Be-/Entladezone BZ eine bezogen auf die Förderrichtung FR seitliche Annäherung zwischen dem Anhängeabschnitt 18, dem Aufnahmeabschnitt 25 und dem Haken 20, so dass durch deren Wechselwirkung das Fördermittel 12 gestoppt werden kann, bis die Haken 20 entfernt werden. Wie aus den Figuren ersichtlich, sind sowohl die Anhängeabschnitte 18, als auch der Aufnahmeabschnitt 25 des Be-/Entladeelements 22 so ausgestaltet, dass sie an ihrer Oberseite über die gesamte Länge durchgehend frei sind, so dass sie von beiden einander entgegengesetzten Seiten längs der Führungsschiene 10 (also längs der Förderrichtung FR) für die Bestückung mit einem Haken 20 eines Förderguthalters zugänglich sind.

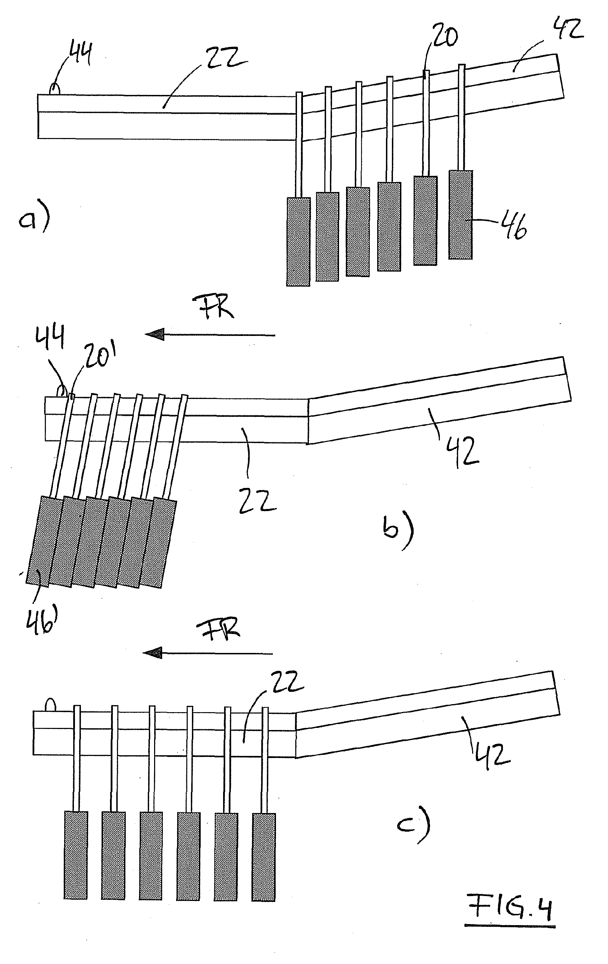

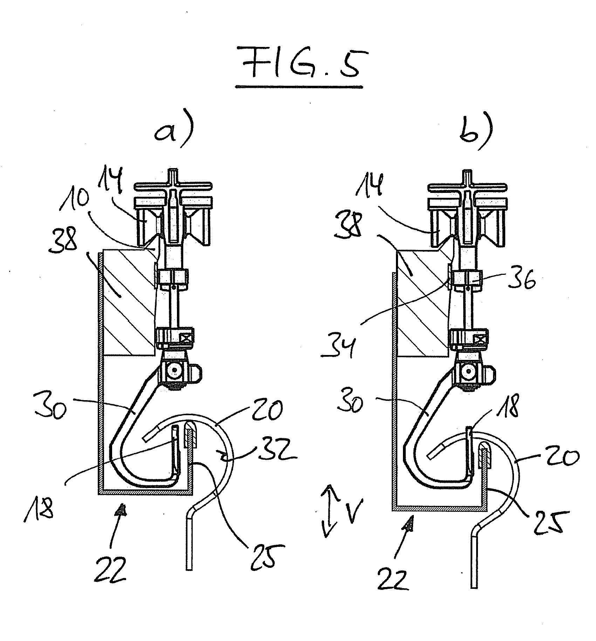

Unter Bezugnahme auf die Fig. 4 und 5 wird nun eine Verwendung eines Be-/Entladeelements 22 zum automatischen Beladen eines Fördermittels 12 mit Förderguthaltern beschrieben.

Fig. 4 zeigt in den Teilfiguren a) bis c) schematisch die Anordnung eines Be-/Entladeelements 22 in einer Beladezone, wobei das Be-/Entladeelement 22 mit einer Zuführschiene 42 verbunden ist. Die Zuführschiene 42 kann beispielsweise Teil einer Vereinzelungsanlage sein, in der Gruppen von mehreren Förderguthaltern gebildet werden, beispielsweise wie in der Fig. 4 angedeutet Gruppen von jeweils sechs Förderguthaltern. Das Be-/Entladeelement 22 weist gemäß Fig. 4 einen nach oben abstehenden Anschlag 44 auf, dessen Funktion nachfolgend beschrieben wird.

Wenn eine Gruppe von Förderguthaltern 46 entlang der Zuführschiene 42 nach unten rutscht, bewegt sich die Gruppe gemäß Fig. 4b) auf dem in der Regel horizontal verlaufenden Be-/Entladeelement 22 in Förderrichtung FR, bis der Haken 20' des vordersten Förderguthalters 46' mit dem Anschlag 44 in Berührung kommt. Hierdurch wird die gesamte Gruppe von Förderguthaltern 46 gestoppt und es erfolgt aufgrund der Trägheit (Förderguthalter 46 mit daran angehängten Kleidungsstücken) eine Schwenkbewegung in Förderrichtung FR, gefolgt von einer Schwenkbewegung in Gegenrichtung (entgegengesetzt zur Förderrichtung FR), wobei sich beim Zurückschwenken die Förderguthalter 46 entlang dem Be-/Entladeelement 22 verteilen, wie dies in der Fig. 4c) angedeutet ist. Die Verteilung ist selbstverständlich nicht absolut regelmäßig, aber sie reicht aus, dass die einzelnen Förderguthalter 46 mit ihren Haken 20 derart bereitgestellt sind, dass sie problemlos in Kerben 48 (Fig. 1) der Anhängeabschnitte 18 der Fördermittel 12 eingehängt werden können.

Zum automatischen Übergeben von einer Gruppe von Förderguthaltern 46 vom Be-/Entladeelement 22 auf ein Fördermittel 12 kann das Be-/Entladeelement 22 beweglich an der Rahmenkonstruktion 38 des Hängefördersystems angebracht sein, so dass insbesondere ein vertikales Absenken des Aufnahmeabschnitts 25 mit daran angehängten Haken 20 möglich ist. In einer Beladesituation, wie sie in der Fig. 4c) dargestellt ist, befindet sich der Aufnahmeabschnitt 25 auf einem vertikalen Niveau, das ein Einfahren eines Fördermittels 12 und insbesondere des Anhängeabschnitts 18 unter der Innenkontur 32 des Hakens 20 ermöglicht, wie dies in der Fig. 5a) angedeutet ist. Das Fördermittel 12 kann dann über geeignete Mittel angehalten werden, so dass anschließend ein Absenken des Aufnahmeabschnitts 25 bzw. des Be-/Entladeelements 22 in Vertikalrichtung V möglich ist, bis die Haken 20 im Anhängabschnitt 18 des Fördermittels 12 eingehängt sind. Ferner wird das vertikale Absenken so weit durchgeführt, dass der Aufnahmeabschnitt 25 nicht mehr in Berührung mit der Innenkontur 32 des Hakens 20 steht, so dass eine freie Ausfahrt des beladenen Fördermittels 12 ermöglicht wird.

Eine derartige automatische Beladung der Fördermittel 12 ermöglicht es, dass ein Lieferant, welcher Kleider anliefert, diese nur auf eine lange Schiene, beispielsweise in Form des vorgestellten Be-/Entladeelements 22 hängen muss, ohne manuell Gruppen von Förderguthaltern zu bilden und diese direkt an die Fördermittel 12 zu hängen. Dies hat insbesondere den Vorteil, dass der Lieferant nicht selbst eine Verteilung vornehmen muss, und dass keine Überlastung der Fördermittel erfolgt, wenn sie unsachgemäß beladen werden.

Das Be-/Entladeelement der vorliegenden Erfindung wurde hier im Zusammenhang mit dem Beladen und Entladen von seitlich zugänglichen Fördermitteln beschrieben. Die Verwendung einer solchen U-förmigen Profilschiene zwecks Be- und Entladung kann an beliebigen Orten entlang der Förderstrecke des Hängefördersystems eingesetzt werden. Ferner kann diese Schiene auch universell zum Einsatz kommen als Zuführschiene oder dergleichen.

Die hier als Be-/Entladeelement bezeichnete, im Wesentlichen U-förmige Schiene, welche sich in ihrer geometrischen Form einem Anhängabschnitt eines in den Figuren dargestellten Fördermittels in Form eines Minitrolleys anpasst, kann nicht nur zum Beladen und Entladen verwendet werden, sondern kann ggf. mit geringen konstruktiven Abwandlungen auch für weitere automatisierte Vorgänge beim Umladen von Förderguthaltern (Kleiderbügeln) von einem Minitrolley auf den anderen bzw. von Minitrolleys auf sog. Single-Carrier, an welchen nur ein einzelner Kleiderbügel aufgehängt werden kann, verwendet werden. Ferner ist es auch denkbar, die hier vorgestellte U-förmige Schiene beim automatischen Entladen von Minitrolleys bzw. Single-Carriern zu verwenden, wobei dabei noch zusätzliche Systemkomponenten vorzusehen sind, wie beispielsweise ein Entladeschwert, das fest oder schaltbar mit der Schiene in Kontakt bzw. in Eingriff gebracht werden kann, so dass am Entladeschwert die Kleiderbügel von den Trolleys bzw. Single-Carriern während der Fahrt abgehoben und aus diesen ausgefädelt werden können. Eine weitere Anwendung der Halteschiene ist die Unterstützung von automatisierten Prozessen zur Neuordnung von Fördergutträgern auf einem Minitrolley, bei denen die Fördergutträger auf einer abschüssigen Förderstrecke kurzzeitig durch die Halteschiene angehoben werden, so dass sie schneller als der Trolley auf der Schiene abwärts rutschen, um dann im vorderen Teil des Trolleys wieder eingehängt zu werden. Eine solche Neuordnung dient der besseren Gewichtsverteilung auf dem Trolley, insbesondere wird hierdurch ausreichend Gewicht auf den vorderen Laufkörper verlagert, so dass die Führung des Trolleys an Weichen oder dergleichen verbessert wird. Wie bereits angedeutet, kann das hier vorgestellte Hängefördersystem nicht nur mit den in den Figuren dargestellten Minitrolleys betrieben werden, sondern es können auch die sog. Einzelgutförderträger bzw. Single-Carrier verwendet werden, wie sie aus der bereits erwähnten WO 2008/098596 der Anmelderin bekannt sind.

## Patentansprüche

1. Hängefördersystem mit wenigstens einem Fördermittel (12), das wenigstens einen Laufkörper (14) aufweist, durch den es hängend an einer Führungsschiene (10) des Systems längs einer Förderstrecke beweglich ist, wobei das Fördermittel (12) einen mit dem Laufkörper (14) bzw. den Laufkörpern verbundenen Anhängeabschnitt (18) für Haken (20) von Förderguthaltern (46), insbesondere Kleiderbügeln, aufweist und wobei der Anhängeabschnitt (18) über einen Halteabschnitt (30) des Fördermittels (12) derart mit dem Laufkörper (14) bzw. den Laufkörpern verbunden ist, dass der Anhängeabschnitt (18) an seiner Oberseite über seine gesamte Länge durchgehend frei ist, so dass er von beiden einander entgegengesetzten Seiten längs der Führungsschiene (10) für die Bestückung mit einem Haken (20) eines Förderguthalters (46) zugänglich ist,
**dadurch gekennzeichnet, dass** das System an der Förderstrecke wenigstens eine Be-/Entladezone mit wenigstens einem schienenartigen Be-/Entladeelement (22) umfasst, entlang dem das Fördermittel (12) an seiner Führungsschiene (10) hängend beweglich ist und das den Anhängeabschnitt (18) eines in der Be-/Entladezone befindlichen Fördermittels (12) wenigstens teilweise umgibt, wobei das Be-/Entladeelement (22) einen im Wesentlichen entlang der Förderstrecke des Systems verlaufenden Aufnahmeabschnitt (25) für die Haken (20) der Förderguthalter (46) umfasst, der an seiner Oberseite über seine gesamte Länge durchgehend frei ist, so dass er von beiden einander entgegengesetzten Seiten längs der Führungsschiene (10) für die Bestückung mit einem Haken (20) eines Förderguthalters (46) zugänglich ist.

2. Hängefördersystem nach Anspruch 1, **dadurch gekennzeichnet, dass** der Aufnahmeabschnitt (25) und der Anhängeabschnitt (18) eines in der Be-/Entladezone befindlichen Fördermittels (12) derart zueinander positionierbar oder positioniert sind, dass das Fördermittel (12) unter Vermittlung von wenigstens einem Haken (20) eines am Anhängeabschnitt (18) aufgehängten Förderguthalters (46) gebremst oder/und gehalten werden kann.

3. Hängefördersystem nach Anspruch 1 oder 2, **dadurch gekennzeichnet, dass** zum Bewegen der Fördermittel (12) ein entlang der Förderstrecke laufendes Reibband (34) vorgesehen ist, mit dem Reibkopplungsmittel (36) des Fördermittels (12) in Berührung gebracht sind oder bringbar sind.

4. Hängefördersystem nach Anspruch 2 und 3, **dadurch gekennzeichnet, dass** durch das Zusammenwirken von Aufnahmeabschnitt (25), Anhängeabschnitt (18) und wenigstens einem Haken (20) eines Förderguthalters (46) die Reibkopplungsmittel (36) eines in der Be-/Entladezone befindlichen Fördermittels (12) vom Reibband (34) entfernbar sind.

5. Hängefördersystem nach einem der Ansprüche 1 bis 4, **dadurch gekennzeichnet, dass** das Be-/Entladeelement (22) derart ausgebildet oder/und am System angebracht ist, dass der Aufnahmeabschnitt (25) des Be-/Entladeelements (22) relativ zu einer durch die Führungsschiene (10) festgelegten Förderrichtung (FR) entlang der Förderstrecke im Bereich der Be-/Entladezone in wenigstens eine Richtung geneigt ist.

6. Hängefördersystem nach Anspruch 5, **dadurch gekennzeichnet, dass** der Aufnahmeabschnitt (25) bezogen auf die Förderrichtung (FR) zur Seite hin weg von der Führungsschiene (10) oder/und nach oben zur Führungsschiene (10) geneigt ist.

7. Hängefördersystem nach einem der Ansprüche 1 bis 6, **dadurch gekennzeichnet, dass** das Be-/Entladeelement (22) quer zur Förderrichtung (FR) ein im Wesentlichen U-förmiges Profil aufweist, wobei der eine der Schenkel (24) des U-förmigen Profils den Aufnahmeabschnitt (25) umfasst.

8. Hängefördersystem nach Anspruch 7, **dadurch gekennzeichnet, dass** der andere Schenkel (26) des U-fömigen Profils an einem die Führungsschiene (10) aufweisenden Trägerrahmen (38) des Fördersystems angebracht oder anbringbar ist.

9. Hängefördersystem nach Anspruch 7 oder 8, **dadurch gekennzeichnet, dass** das Be-/Entladeelement (22) derart ausgebildet ist, dass die beiden Schenkel (24, 26) und die Basis (28) des U-förmigen Profils einen jeweiligen Abstand zum Fördermittel, insbesondere zu dessen Anhängeabschnitt (18) und Halteabschnitt, aufweist, wobei die Abstände derart bemessen sind, dass ein Fördermittel (12) ohne daran angehängte Förderguthalter (46) frei entlang dem Be-/Entladeelement (22) beweglich ist.

10. Hängefördersystem nach Anspruch 1, **dadurch gekennzeichnet, dass** das Be-/Entladeelement (22) verstellbar an einem Trägerrahmen (38) des Fördersystems angebracht ist, derart, dass die Position des Aufnahmeabschnitts (25) relativ zum Anhängeabschnitt (18) eines in der Be-/Entladezone befindlichen Fördermittels (12) veränderbar ist, vorzugsweise in vertikaler Richtung (V) veränderbar ist.

11. Hängefördersystem nach Anspruch 10, **dadurch gekennzeichnet, dass** das Be-/Entladeelement (22) am Aufnahmeabschnitt (25) ein Anschlagelement (44) umfasst, das Förderguthalter (46, 46') in Förderrichtung stoppt.

12. Hängefördersystem nach Anspruch 11, **dadurch gekennzeichnet, dass** das Be-/Entladeelement (22) derart ausgebildet ist, dass am Aufnahmeabschnitt (25) angehängte Förderguthalter (46) durch Absenken des Be-/Entladeelements (22) in den Aufnahmeabschnitt (18) eines in der Be-/Entladezone bereitstehenden Fördermittels (12) einhängbar sind und das Fördermittel (12) mit angehängten Förderguthaltern (46) über das Anschlagelement (44) hinweg aus der Be-/Entladezone beweglich ist.

13. Hängefördersystem nach einem der Ansprüche 1 bis 12, **dadurch gekennzeichnet, dass** es ferner eine vorzugsweise geneigte Förderguthalterzuführung (42) oder/und eine Förderguthaltervereinzelungseinrichtung umfasst, um eine bestimmte Anzahl von Förderguthaltern (46) automatisch auf dem in Förderrichtung (FR) anschließenden Be-/Entladeelement (22) bereitzustellen zur weiteren Beförderung mittels eines Fördermittels (12).

14. Hängefördersystem einem der vorhergehenden Ansprüche, **dadurch gekennzeichnet, dass** der Aufnahmeabschnitt (25) ein Gleitstück aufweist, auf dem Haken (20) der Förderguthalter (46) aufnehmbar und verschiebbar sind, wobei sich das Gleitstück vorzugsweise im Wesentlichen über die gesamte Länge des Be-/Entladeelements (22) erstreckt.
